# FASCICULE DE BREVET EUROPEEN

(11) **EP 1 876 098 B1**
(45) Date de publication et mention de la délivrance du brevet: **02.06.2010**
(21) Numéro de dépôt: 07111535.6
(22) Date de dépôt: 02.07.2007
(51) Int. Cl.: B64G 1/40, B64G 1/24

(54) **Dispositif d'actionnement d'un engin spatial par réflexion d'une lumière astrale sur des miroirs auxiliaires orientés différement**
Vorrichtung zur Betätigung eines Raumflugkörpers durch Reflexion eines Astrallichts auf unterschiedlich ausgerichtete Hilfsspiegel
Device for powering a spaceship by reflecting astral light off auxiliary mirrors placed in different directions

(30) Priorité: 03.07.2006 FR 0652770
(43) Date de publication de la demande: 09.01.2008
(73) Titulaire: Thales, 92200 Neuilly Sur Seine (FR)
(72) Inventeur: Sainct, Hervé, 06110 Le Cannet (FR); Leyre, Xavier, 06650 Opio (FR)
(74) Mandataire: Esselin, Sophie

(56) Documents cités:
- JP-A- 5 139 393
- US-A- 3 171 403
- US-A1- 2003 192 998

## Description

L'invention concerne le domaine des engins spatiaux, tels que des satellites d'observation, volant éventuellement en formation, des sondes, ou tout autre engin spatial se trouvant sur tout type de trajectoire (par exemple en orbite autour d'un corps, comme par exemple la Terre, ou sur une trajectoire interplanétaire), et plus précisément celui de l'actionnement de tels engins spatiaux.

On entend ici par « actionnement » le fait d'agir sur un engin spatial afin de modifier finement, voire très finement, sa position dans l'espace et/ou son attitude, par exemple par génération d'un couple (ou moment de forces) et/ou d'une translation (également appelée « delta-V »).

Comme le sait l'homme de l'art, dans certaines missions spatiales l'attitude et/ou la position d'un engin spatial doi(ven)t être contrôlée(s) avec une (grande) précision. Cela peut par exemple être le cas dans une mission mettant en oeuvre des mesures interférométriques ou des lois de balayage très précises, ou dans le cas d'un vol en formation, par exemple pour positionner précisément diverses parties d'un instrument les unes par rapport aux autres.

Pour ce faire, les engins spatiaux sont généralement pourvus de propulseur(s) à gaz froid ou électrique(s). Mais, de tels propulseurs ne sont généralement pas suffisamment précis, doivent faire l'objet d'une étude d'aptitude (« qualification ») en raison de leur complexité, ont une durée de vie limitée lorsqu'ils consomment du carburant, et peuvent parfois induire autour de l'engin spatial un environnement polluant de gaz/plasma qui peut s'avérer critique en présence d'instrument(s) d'optique. Les propulsions électriques exigent de plus, en général, une forte puissance pour fonctionner, ce qui influence la conception même de l'engin spatial.

Il a également été proposé d'utiliser la lumière solaire, et plus précisément la pression qu'elle exerce, pour induire un couple (de force) sur un engin spatial. Ainsi, on peut utiliser une espèce de télescope comportant un miroir primaire chargé de réfléchir la lumière solaire, sous la forme d'un faisceau lumineux primaire, en direction d'un miroir secondaire, ce dernier réfléchissant alors une fraction au moins du faisceau lumineux primaire dans une direction choisie de manière à induire sur l'engin spatial une poussée dans une direction opposée à la direction de réflexion choisie. L'inconvénient principal de cette solution réside dans le fait qu'elle ne permet de générer qu'une unique force dans une unique direction choisie.

Aucune solution connue n'apportant une entière satisfaction, l'invention a donc pour but d'améliorer la situation, et notamment d'induire sur un engin spatial différents couples et/ou différentes translations, en fonction des besoins, si possible en consommant très peu d'énergie.

Elle propose à cet effet un dispositif destiné à actionner un engin spatial, et comprenant un miroir primaire fixe chargé de réfléchir de la lumière provenant d'un astre en direction d'un miroir secondaire, sous la forme d'un faisceau lumineux primaire, ce miroir secondaire étant lui-même chargé de réfléchir dans (au moins) une direction choisie une partie au moins du faisceau lumineux primaire, sous la forme d'un faisceau secondaire.

Ce dispositif d'actionnement se caractérise par le fait qu'il comprend :
- au moins deux miroirs auxiliaires placés en des endroits choisis et chargés de réfléchir une partie au moins du faisceau lumineux secondaire qui est issu du miroir secondaire dans des directions différentes choisies de manière à induire des déplacements différents de l'engin spatial, et
- des moyens de positionnement (ou actionneur) sélectif chargé(s) de provoquer la réflexion sélective du faisceau lumineux secondaire en direction de l'un au moins des miroirs auxiliaires, de sorte que sa réflexion sur le(s) miroir(s) auxiliaire(s) induise un déplacement choisi de l'engin spatial.

Un unique actionneur (au minimum) est ainsi nécessaire pour induire la création de la totalité des forces possibles et des couples possibles autour de trois axes, alors qu'un dispositif de l'art antérieur requiert toujours plusieurs tuyères et autant ou plus de commandes (par exemple de vannes) pour parvenir au même résultat.

Le dispositif selon l'invention peut comporter d'autres caractéristiques qui peuvent être prises séparément ou en combinaison, et notamment :
- dans un premier exemple de réalisation, son miroir secondaire peut par exemple être solidarisé à ses moyens de positionnement afin de pouvoir être placé par ces derniers dans des positions différentes, choisies de manière à permettre chacune la réflexion du faisceau lumineux secondaire vers au moins un miroir auxiliaire choisi ;
   ➢ son miroir secondaire peut par exemple être chargé de séparer le faisceau lumineux secondaire en au moins deux parties afin de transmettre simultanément ces deux parties en direction de deux miroirs auxiliaires choisis ;
- dans un deuxième exemple de réalisation, son miroir secondaire peut par exemple être fixe par rapport au miroir primaire. Dans ce cas, il comprend un miroir de renvoi placé sur le trajet du faisceau lumineux secondaire et solidarisé aux moyens de positionnement afin de pouvoir être placé par ces derniers dans des positions différentes, choisies de manière à permettre chacune la réflexion du faisceau lumineux secondaire vers au moins un miroir auxiliaire choisi ;
- dans un troisième exemple de réalisation, il peut comprendre un miroir de renvoi fixe par rapport au miroir primaire et placé sur le trajet du faisceau lumineux secondaire. Dans ce cas, le miroir secondaire est solidarisé aux moyens de positionnement afin de pouvoir être placé par ces derniers dans des positions différentes, choisies de manière à permettre chacune la réflexion du faisceau lumineux secondaire vers des zones de réflexion différentes du miroir de renvoi, dédiées à la réflexion vers des miroirs auxiliaires différents ;
- dans les deuxième et troisième exemples de réalisation, le miroir de renvoi peut par exemple être chargé de séparer le faisceau lumineux secondaire en au moins deux parties afin de transmettre simultanément ces deux parties en direction de deux miroirs auxiliaires choisis ;
- ses moyens de positionnement (ou actionneur(s)) peuvent comprendre un moyen de support solidarisé audit miroir secondaire ou au miroir de renvoi et des moyens de déplacement chargés de déplacer le moyen de support ;
   ➢ ces moyens de déplacement peu(ven)t par exemple être agencé(s) sous la forme d'un moteur électrique propre à entraîner le moyen de support en rotation autour d'un axe de rotation orienté de façon choisie;
   ➢ en variante, les moyens de déplacement peuvent être agencés sous la forme d'un élément piézoélectrique ;
- certains au moins de ses miroirs, parmi le miroir primaire, le miroir secondaire et les miroirs auxiliaires, peuvent éventuellement constituer ensemble un télescope ;
- certains au moins de ses miroirs auxiliaires peuvent être installés dans des positions fixes par rapport au miroir primaire ;
- il peut comprendre des moyens de positionnement sélectif auxiliaires chargés de placer certains au moins des miroirs auxiliaires dans des positions différentes qui sont choisies de sorte qu'ils puissent chacun réfléchir le faisceau lumineux secondaire dans différentes directions choisies ;
- tous les éléments qui le constituent peuvent être destinés à être solidarisés à l'engin spatial à actionner ;
- en variante, les éléments qui le constituent peuvent être destinés à être répartis sur au moins deux engins spatiaux.

L'invention propose également un engin spatial, comme par exemple un satellite, une partie de satellite, une sonde spatiale, une partie d'une sonde spatiale, ou tout autre engin spatial se trouvant sur tout type de trajectoire dans l'espace, équipé d'un dispositif d'actionnement du type de celui présenté ci-avant.

L'invention propose également un ensemble d'engins spatiaux destinés à voler en formation, et dans lequel l'un au moins des engins spatiaux est un engin spatial du type de celui présenté ci-avant et est agencé pour utiliser son dispositif d'actionnement afin de coordonner sa trajectoire avec au moins un autre de ses engins spatiaux.

D'autres caractéristiques et avantages de l'invention apparaîtront à l'examen de la description détaillée ci-après, et des dessins annexés, sur lesquels :
- la figure 1 illustre de façon très schématique un engin spatial équipé d'un exemple de réalisation d'un dispositif d'actionnement selon l'invention,
- la figure 2 illustre de façon très schématique un exemple de réalisation de moyens de positionnement sélectif d'un miroir de renvoi, et
- la figure 3 illustre de façon très schématique un exemple de réalisation d'un miroir de renvoi constitué de deux demi-miroirs.

Les dessins annexés pourront non seulement servir à compléter l'invention, mais aussi contribuer à sa définition, le cas échéant.

L'invention a pour objet d'induire sur un engin spatial, si possible avec une énergie très réduite, et en fonction des besoins, différents couples et/ou différentes translations.

Dans ce qui suit, on considère à titre d'exemple non limitatif que l'engin spatial est un satellite, par exemple dédié à l'observation, éventuellement en formation. Mais, l'invention n'est pas limitée à ce type d'engin spatial. Elle concerne en effet tout type d'engin spatial dont l'attitude et/ou la position doi(ven)t être contrôlée(s) avec une (grande) précision sur n'importe quel type de trajectoire ou d'orbite. On notera cependant que l'invention ne peut concerner que les situations dans lesquelles un engin spatial doit subir de très faibles déplacements (rotation et/ou translations). Par conséquent, l'invention est particulièrement bien adaptée, bien que de façon non exclusive, au contrôle final très précis d'attitude et/ou de position au sein d'une boucle de contrôle de positionnement.

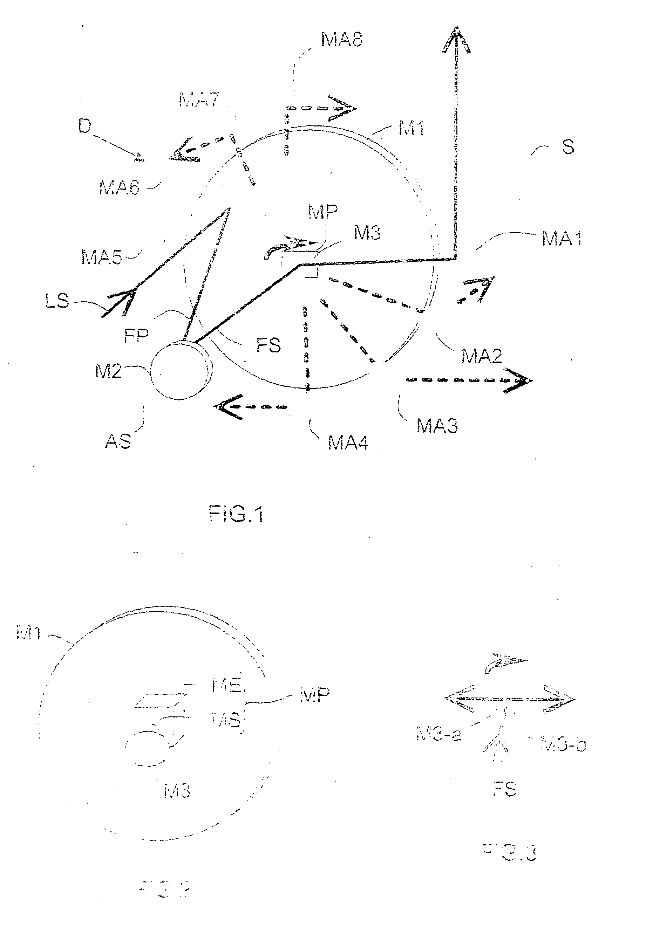

On se réfère tout d'abord aux figures 1 et 2 pour décrire un exemple de réalisation d'un dispositif D, selon l'invention, destiné à actionner un engin spatial S (ici un satellite d'observation).

Comme cela est très schématiquement illustré sur la figure 1, un dispositif d'actionnement D, selon l'invention, comprend au moins un miroir primaire M1 fixe solidarisé à un engin spatial S, un miroir secondaire M2, au moins deux miroirs auxiliaires MAj (ici j = 1 à 8 à titre d'exemple non limitatif, mais il peut prendre n'importe quelle valeur supérieure ou égale à deux), et des moyens de positionnement MP. Dans ce qui suit on appelle N le nombre de miroirs auxiliaires MAj (soit j = 1 à N).

Le miroir primaire M1 est installé sur le satellite S de manière à pointer dans la direction AS d'un astre lumineux, comme par exemple le soleil. Il est chargé de réfléchir une partie de la lumière LS qui provient de cet astre en direction du miroir secondaire M2, sous la forme d'un faisceau lumineux primaire FP.

Le miroir secondaire M2 est chargé de réfléchir, dans (au moins) une direction choisie et sous la forme d'un faisceau secondaire FS, une partie au moins du faisceau lumineux primaire FP issu du miroir primaire M1.

Comme on le verra plus loin, ce miroir secondaire M2 peut être soit fixe soit orientable (grâce aux moyens de positionnement MP) par rapport au miroir primaire M1.

On notera que certains au moins des miroirs, parmi le miroir primaire M1, le miroir secondaire M2 et les miroirs auxiliaires MAj, peuvent constituer ensemble un télescope. Par exemple, le miroir secondaire M2 peut être éventuellement positionné suivant le même axe AS que le miroir primaire M1 de manière à constituer ensemble un télescope.

Mais, cela n'est pas obligatoire. Le miroir secondaire M2 peut en effet être positionné hors d'axe par rapport au miroir primaire M1. Il s'agit en effet, essentiellement, de canaliser l'énergie solaire sans chercher à créer une image ou à maintenir une quelconque « qualité optique » au travers de l'instrument.

Les dimensions respectives des miroirs primaire M1 et secondaire M2 sont notamment choisies en fonction de l'intensité des couples et/ou forces à appliquer au satellite S.

Dans l'exemple illustré sur la figure 1, les miroirs auxiliaires MAj sont au nombre de huit (N=8) à titre purement illustratif, et non limitatif. Tout autre nombre N supérieur ou égal à deux peut être envisagé. Ainsi, si l'on veut pouvoir créer la totalité des forces possibles et des couples possibles autour de trois axes, les miroirs auxiliaires MAj peuvent être au nombre de 12 (6 pour les rotations et 6 pour les forces/translations). Ce nombre N égal à 12 peut varier. Ainsi, on peut l'augmenter en ajoutant des miroirs auxiliaires MAj particuliers pour obtenir un effet privilégié dans une direction donnée ou autour d'un axe particulier, ou le diminuer en attribuant à certains au moins des miroirs auxiliaires MAj deux fonctions (par exemple être à la fois utilisables pour créer une rotation (couple de forces) et, en association avec un autre miroir auxiliaire MAj, pour créer un déplacement (force pure)).

Les N miroirs auxiliaires MAj sont placés en des endroits choisis de manière à pouvoir réfléchir une partie au moins du faisceau lumineux secondaire FS, qui est issu du miroir secondaire M2, dans des directions différentes choisies. Lorsque des photons du faisceau lumineux secondaire FS sont réfléchis dans une direction choisie par un miroir auxiliaire MAj sélectionné, cela induit une force (pression solaire) dans une direction opposée à ladite direction choisie, qui peut provoquer un déplacement du satellite S ainsi qu'une rotation (couple) si la direction émergente du rayon n'est pas alignée avec le centre de gravité du satellite S. Par conséquent, chaque miroir auxiliaire MAj est destiné à induire un effet dans une direction choisie, et par exemple deux miroirs auxiliaires MAj, MAj' placés dans des positions symétriques peuvent induire, lorsqu'ils réfléchissent simultanément deux parties du faisceau lumineux secondaire FS, soit un couple pur (autour du centre de gravité du satellite S) et donc une rotation pure, soit une translation pure (ou delta-V). On peut également obtenir un effet similaire à celui obtenu dans le cas d'une illumination simultanée de deux miroirs auxiliaires MAj et MAj' en éclairant consécutivement dans le temps deux miroirs auxiliaires MAj et MAj' (voire plus de deux), si l'on préfère utiliser un seul faisceau (et non un faisceau scindé en deux).

Les moyens de positionnement sélectif MP sont chargés de provoquer sélectivement la réflexion du faisceau lumineux secondaire FS en direction d'un ou plusieurs (par exemple deux) miroirs auxiliaires sélectionnés MAj, afin que chaque miroir auxiliaire sélectionné MAj le réfléchisse dans la direction choisie correspondante en induisant une force ou un couple choisi, et donc un déplacement ou une rotation choisi(e) du satellite S.

Ces moyens de positionnement sélectif MP peuvent contrôler l'orientation du miroir secondaire M2 et/ou d'un miroir de renvoi M3 intercalé entre le miroir secondaire M2 et les miroirs auxiliaires MAj sur le trajet du faisceau lumineux secondaire FS. Ils sont donc formés d'un ou plusieurs éléments d'actionnement (ou actionneur(s)).

Dans l'exemple illustré sur les figures 1 et 2, le miroir secondaire M2 est fixe par rapport au miroir primaire M1, tandis qu'un miroir de renvoi M3 est solidarisé aux moyens de positionnement MP afin de pouvoir être orienté dans différentes positions choisies par ces derniers, de manière à pouvoir réfléchir dans chacune de ses positions le faisceau lumineux secondaire FS vers au moins un miroir auxiliaire MAj choisi.

Le miroir de renvoi M3 est par exemple un miroir plan permettant de réfléchir à 90° (en direction d'un miroir auxiliaire MAj fonction de sa position personnelle) le faisceau lumineux secondaire FS issu du miroir secondaire M2. Dans ce cas, le dispositif D ne peut induire sur le satellite S, à un instant donné, qu'un couple, généralement non pur (car associé à une force), dont la direction et le sens dépendent de la direction de réflexion du miroir auxiliaire MAj sélectionné (c'est-à-dire celui qui effectue la réflexion finale du faisceau lumineux secondaire FS).

Dans l'exemple illustré sur la figure 1, les moyens de positionnement MP sont agencés de manière à placer le miroir de renvoi M3 dans plusieurs orientations (positions) différentes qui correspondent respectivement au nombre N de miroirs auxiliaires MAj.

Comme cela est schématiquement illustré sur la figure 2, les moyens de positionnement (ou actionneur) MP peuvent par exemple comporter un support MS solidarisé au miroir de renvoi M3 et des moyens de déplacement ME chargés de déplacer le support MS. Ce dernier peut par exemple se présenter sous la forme d'un axe dont l'une des extrémités est couplée à la face arrière du miroir de renvoi M3 et dont l'autre extrémité (opposé) est déplacée par les moyens de déplacement ME.

Les moyens de déplacement ME peuvent par exemple comporter un moteur électrique fixe par rapport au miroir primaire M1 et éventuellement de type pas-à-pas. Ce moteur ME est par exemple conçu de manière à entraîner le support MS en rotation (ou à le faire pivoter) autour d'un axe de rotation orienté de façon choisie en fonction des positions respectives des miroirs auxiliaires MAj destinataires du faisceau lumineux secondaire FS. Mais, le moteur ME pourrait être également conçu de manière à entraîner le support MS en translation suivant un axe orienté de façon choisie. Plus généralement, le type d'entraînement que met en oeuvre le moteur ME dépend des positions respectives des miroirs auxiliaires MAj par rapport à la position du miroir de renvoi M3.

Les moyens de déplacement ME peuvent se présenter sous d'autres formes qu'un moteur (électrique). Ainsi, ils peuvent être agencés sous la forme d'actionneurs piézoélectriques. Dans ce cas, le miroir de renvoi M3 est solidarisé à l'actionneur piézoélectrique.

Lorsque le miroir de renvoi M3 réfléchit tout le faisceau lumineux secondaire FS qu'il reçoit vers un seul miroir auxiliaire MAj, cela ne peut pas induire de couple pur sur le satellite S. Cependant, en choisissant des miroirs successifs différents pendant des durées choisies, on peut soumettre le satellite S, en moyenne, à des couples purs ou des forces pures qui provoquent une rotation pure ou une translation dans une direction choisie, grâce à un effet de moyennage.

Mais, dans une variante, il est possible de soumettre directement le satellite S à une force pure ou un couple pur choisi(e) (dans des direction et sens choisis). Pour ce faire, on peut par exemple utiliser un miroir de renvoi M3, constitué de deux demi-miroirs M3-a et M3-b, comme illustré sur la figure 3, ainsi que des paires de miroirs auxiliaires MAj placées de façon sensiblement symétrique par rapport au miroir de renvoi M3 (par exemple à sa périphérie comme illustré sur la figure 1). Grâce à cet agencement, le faisceau lumineux secondaire FS qui parvient sur la face réfléchissante du miroir de renvoi M3 peut être séparé par les deux demi-miroirs M3-a et M3-b en deux parties qui sont respectivement réfléchies en direction des deux miroirs auxiliaires de la paire qui correspond à la position en cours dudit miroir de renvoi M3 (chaque position (ou orientation) du miroir de renvoi M3 permet en effet de sélectionner l'une des paires). Ainsi, les deux demi-miroirs M3-a et M3-b peuvent à leur tour réfléchir les deux parties du faisceau lumineux secondaire FS dans des direction et sens choisis symétriques induisant ainsi un couple ou une force pur(e) sur le satellite S.

Dans une première variante non représentée, le dispositif d'actionnement D peut ne pas comporter de miroir de renvoi M3. Dans ce cas, c'est le miroir secondaire M2 qui est solidarisé aux moyens de positionnement MP afin de pouvoir être orienté dans différentes positions choisies par ces derniers. Dans ce cas, chaque orientation choisie du miroir secondaire M2 est dédiée à la réflexion vers au moins un miroir auxiliaire MAj choisi.

Dans cette première variante, les moyens de positionnement MP peuvent être du même type que ceux décrits ci-avant. De même, le miroir secondaire M2 joue le rôle du miroir de renvoi M3 décrit ci-avant, et par conséquent il réfléchit directement le faisceau lumineux secondaire FS (qu'il génère) vers les miroirs auxiliaires MAj.

Dans une seconde variante non représentée, le dispositif d'actionnement D peut comporter un miroir de renvoi M3 fixe par rapport au miroir primaire M1 et un miroir secondaire M2 solidarisé aux moyens de positionnement MP afin de pouvoir être orienté dans différentes positions choisies par ces derniers. Dans ce cas, les miroirs auxiliaires MAj sont par exemple placés les uns à côté des autres et orientés dans des positions différentes, et à chaque orientation choisie du miroir secondaire M2 correspond une zone de réflexion du faisceau lumineux secondaire FS sur le miroir de renvoi M3, qui est dédiée à un miroir auxiliaire MAj.

Dans cette seconde variante, les moyens de positionnement MP peuvent être du même type que ceux décrits ci-avant.

Dans les trois modes de réalisation présentés ci-avant les miroirs auxiliaires MAj sont installés dans des positions fixes par rapport au miroir primaire M1. Mais, cela n'est pas une obligation. On peut en effet envisager que certains miroirs auxiliaires soient fixes par rapport au miroir primaire M1, tandis que les autres peuvent être placés par des moyens de positionnement sélectif auxiliaires dans des positions différentes, choisies pour qu'ils puissent chacun réfléchir le faisceau lumineux secondaire FS dans différentes directions choisies de manière à induire des couples ou forces différent(e)s. On peut également envisager que tous les miroirs auxiliaires MAj puissent être placés par des moyens de positionnement sélectif auxiliaires dans des positions différentes, pour qu'ils puissent chacun réfléchir le faisceau lumineux secondaire FS dans différentes directions choisies de manière à induire des couples différents. Les moyens de positionnement sélectif auxiliaires peuvent être du même type que les moyens de positionnement sélectif MP décrits précédemment.

On notera que des moyens de positionnement de secours peuvent être éventuellement prévus sans augmenter de façon significative la charge du satellite S.

Le dispositif d'actionnement selon l'invention offre un certain nombre d'avantages, parmi lesquels :
- il peut réfléchir la lumière solaire dans n'importe quelle direction choisie parmi un ensemble de directions prédéfinies, au moyen d'un unique actionneur (dans le mode de réalisation le plus simple), de manière à induire des couples et/ou des forces dans n'importe laquelle desdites directions prédéfinies,
- il consomme très peu d'énergie, typiquement quelques Watts,
- il n'induit pas de pollution dans l'environnement du satellite,
- il met en oeuvre une technologie très simple qui ne nécessite pas d'étude d'aptitude (« qualification spatiale »),
- son coût est réduit du fait que ses éléments optiques n'ont pas besoin d'être de grande qualité. On notera en effet, qu'il n'est par exemple pas nécessaire d'utiliser des miroirs en verre, mais que de simples miroirs en métal (ou équivalent) peuvent suffire, car il est seulement nécessaire de canaliser l'énergie solaire recueillie. Il est notamment inutile que le pinceau lumineux sortant du dispositif crée en quelque endroit que ce soit une image fidèle du soleil ou plus généralement d'objets du flux lumineux entrant. Le principe de l'invention s'applique donc à tout type de système collecteur de flux quel que soit son arrangement,
- la précision des mouvements des moyens de positionnement n'est pas critique,
- la combinaison optique utilisée pour canaliser l'énergie solaire peut éventuellement être ajustée de sorte que soit très petit le mouvement nécessaire au miroir, dont la position est contrôlée par les moyens de positionnement MP, pour faire passer son faisceau d'un miroir auxiliaire MAj à un autre MAj' (par exemple au moyen d'un grandissement optique adéquat). Cela permet en effet de simplifier les moyens de positionnement MP et peut offrir d'autres avantages,
- du fait de son positionnement à l'extérieur de l'engin spatial il peut servir en outre (indépendamment de sa fonction première) d'écran de protection, notamment thermique, pour ce dernier, et par conséquent remplacer tout ou partie de ses écrans de protection,
- du fait des intensités très faibles des couples et/ou forces qu'il induit, il permet de finaliser avec une grande précision la définition de la position et/ou de l'attitude de son engin spatial.

L'invention ne se limite pas aux modes de réalisation de dispositif d'actionnement et d'engin spatial décrits ci-avant, seulement à titre d'exemple, mais elle englobe toutes les variantes que pourra envisager l'homme de l'art dans le cadre des revendications ci-après.

Ainsi, dans ce qui précède on a décrit un exemple de réalisation d'un dispositif d'actionnement dans lequel tous les éléments qui le constituent sont solidarisés à un engin spatial devant être actionné. Mais, l'invention n'est pas limitée à cet exemple de réalisation. En effet, les éléments qui constituent le dispositif d'actionnement peuvent être répartis sur au moins deux engins spatiaux distants l'un de l'autre et volant en formation.

Par ailleurs, l'invention concerne également les ensembles d'engins spatiaux destinés à voler en formation, et dans lesquels l'un au moins des engins spatiaux comprend un dispositif d'actionnement qu'il utilise pour coordonner sa trajectoire avec l'un au moins des autres engins spatiaux (de son ensemble).

## Revendications

1. Dispositif (D) d'actionnement d'un engin spatial (S), comprenant un miroir primaire fixe (M1) propre à réfléchir de la lumière provenant d'un astre en direction d'un miroir secondaire (M2), sous la forme d'un faisceau lumineux primaire, ledit miroir secondaire (M2) étant alors propre à réfléchir dans une direction choisie une partie au moins dudit faisceau lumineux primaire, sous la forme d'un faisceau secondaire, **caractérisé en ce qu'**il comprend i) au moins deux miroirs auxiliaires (MA1-MA8) placés en des endroits choisis et propres à réfléchir une partie au moins dudit faisceau lumineux secondaire issu dudit miroir secondaire (M2) dans des directions différentes choisies de manière à induire des déplacements différents dudit engin spatial (S), et ii) des moyens de positionnement sélectif (MP) agencés pour provoquer la réflexion sélective dudit faisceau lumineux secondaire en direction de l'un au moins desdits miroirs auxiliaires (MA1-MA8), de sorte que sa réflexion sur le(s)dit(s) miroir(s) auxiliaire(s) induise un déplacement choisi dudit engin spatial (S).

2. Dispositif selon la revendication 1, **caractérisé en ce que** ledit miroir secondaire (M2) est solidarisé auxdits moyens de positionnement (MP) de manière à pouvoir être placé par ces derniers dans des positions différentes, choisies de manière à permettre chacune la réflexion dudit faisceau lumineux secondaire vers au moins un miroir auxiliaire (MA1-MA8) choisi.

3. Dispositif selon la revendication 2, **caractérisé en ce que** ledit miroir secondaire (M2) est agencé pour séparer ledit faisceau lumineux secondaire en au moins deux parties de manière à transmettre simultanément ces deux parties en direction de deux miroirs auxiliaires choisis.

4. Dispositif selon la revendication 1, **caractérisé en ce que** ledit miroir secondaire (M2) est fixe par rapport audit miroir primaire (M1), et **en ce qu'**il comprend un miroir de renvoi (M3) placé sur le trajet dudit faisceau lumineux secondaire et solidarisé auxdits moyens de positionnement (MP) de manière à pouvoir être placé par ces derniers dans des positions différentes, choisies de manière à permettre chacune la réflexion dudit faisceau lumineux secondaire vers au moins un miroir auxiliaire choisi.

5. Dispositif selon la revendication 1, **caractérisé en ce qu'**il comprend un miroir de renvoi (M3) fixe par rapport audit miroir primaire (M1) et placé sur le trajet dudit faisceau lumineux secondaire, et **en ce que** ledit miroir secondaire (M2) est solidarisé auxdits moyens de positionnement (MP) de manière à pouvoir être placé par ces derniers dans des positions différentes, choisies de manière à permettre chacune la réflexion dudit faisceau lumineux secondaire vers des zones de réflexion différentes dudit miroir de renvoi (M3), dédiées à la réflexion vers des miroirs auxiliaires (MA1-MA8) différents.

6. Dispositif selon l'une des revendications 4 et 5, **caractérisé en ce que** ledit miroir de renvoi (M3) est agencé pour séparer ledit faisceau lumineux secondaire en au moins deux parties de manière à transmettre simultanément ces deux parties en direction de deux miroirs auxiliaires choisis.

7. Dispositif selon l'une des revendications 2 à 6, **caractérisé en ce que** lesdits moyens de positionnement (MP) comprennent un moyen de support (MS) solidarisé audit miroir secondaire (M2) ou audit miroir de renvoi (M3) et des moyens de déplacement (ME) propres à déplacer ledit moyen de support (MS).

8. Dispositif selon la revendication 7, **caractérisé en ce que** lesdits moyens de déplacement (ME) sont agencés sous la forme d'un moteur électrique propre à entraîner ledit moyen de support (MS) en rotation autour d'un axe de rotation orienté de façon choisie.

9. Dispositif selon la revendication 7, **caractérisé en ce que** lesdits moyens de déplacement (ME) sont agencés sous la forme d'un élément piézoélectrique.

10. Dispositif selon l'une des revendications 1 à 9, **caractérisé en ce que** certains au moins desdits miroirs, parmi le miroir primaire (M1), le miroir secondaire (M2) et les miroirs auxiliaires (MAj), constituent ensemble un télescope.

11. Dispositif selon l'une des revendications 1 à 10, **caractérisé en ce que** certains au moins desdits miroirs auxiliaires (MA1-MA8) sont installés dans des positions fixes par rapport audit miroir primaire (M1).

12. Dispositif selon l'une des revendications 1 à 10, **caractérisé en ce qu'**il comprend des moyens de positionnement sélectif auxiliaires agencés pour placer certains au moins desdits miroirs auxiliaires (MA1-MA8) dans des positions différentes, choisies de sorte qu'ils puissent chacun réfléchir ledit faisceau lumineux secondaire dans différentes directions choisies.

13. Dispositif selon l'une des revendications 1 à 12, **caractérisé en ce que** tous les éléments qui le constituent sont propres à être solidarisés audit engin spatial à actionner.

14. Dispositif selon l'une des revendications 1 à 12, **caractérisé en ce que** les éléments qui le constituent sont propres à être répartis sur au moins deux engins spatiaux distants l'un de l'autre.

15. Engin spatial (S), **caractérisé en ce qu'**il comprend un dispositif d'actionnement (D) selon l'une des revendications précédentes.

16. Engin spatial selon la revendication 15, **caractérisé en ce qu'**il est choisi dans un groupe comprenant au moins des satellites, des sondes spatiales, des parties de satellite et des parties de sonde spatiale.

17. Ensemble d'engins spatiaux (S) destinés à voler en formation, **caractérisé en ce que** l'un au moins desdits engins spatiaux est un engin spatial (S) selon l'une des revendications 15 et 16, agencé pour utiliser son dispositif d'actionnement (D) pour coordonner sa trajectoire avec au moins un autre desdits engins spatiaux (S).

## Claims

1. A device (D) for actuating a spacecraft (S), comprising a fixed primary mirror (M1) capable of reflecting the light originating from a star towards a secondary mirror (M2) in the form of a primary light beam, said secondary mirror (M2) also being capable of reflecting in a selected direction at least part of said primary light beam in the form of a secondary beam, **characterised in that** it comprises i) at least two auxiliary mirrors (MA1-MA8) placed at selected locations and capable of reflecting at least part of said secondary light beam originating from said secondary mirror (M2) in different directions, which directions are selected so as to induce different displacements of said spacecraft (S), and ii) selective positioning means (MP) arranged to cause selective reflection of said secondary light beam towards at least one of said auxiliary mirrors (MA1-MA8), so that its reflection on said auxiliary mirror(s) induces a selected displacement of said spacecraft (S).

2. The device according to claim 1, **characterised in that** said secondary mirror (M2) is joined to said positioning means (MP) in order to be able to be placed by said positioning means in different positions, which positions are selected so that each allows the reflection of said secondary light beam to be directed towards at least one selected auxiliary mirror (MA1-MA8).

3. The device according to claim 2, **characterised in that** said secondary mirror (M2) is arranged to separate said secondary light beam into at least two parts in order to simultaneously transmit these two parts towards two selected auxiliary mirrors.

4. The device according to claim 1, **characterised in that** said secondary mirror (M2) is fixed relative to said primary mirror (M1) and **in that** it comprises a return mirror (M3) placed in the path of said secondary light beam and joined to said positioning means (MP) so that it can be placed by said positioning means in the various positions, which positions are selected so that each allows the reflection of said secondary light beam to be directed towards at least one selected auxiliary mirror.

5. The device according to claim 1, **characterised in that** it comprises a return mirror (M3) fixed relative to said first mirror (M1) and placed in the path of said secondary light beam, and **in that** said secondary mirror (M2) is joined to said positioning means (MP) in order to be placed by said positioning means in different positions, which positions are selected so that each allows the reflection of said secondary light beam to be directed towards different reflection zones of said return mirror (M3), dedicated to reflect towards the different auxiliary mirrors (MA1-MA8).

6. The device according to any one of claims 4 or 5, **characterised in that** said return mirror (M3) is arranged to separate said secondary light beam into at least two parts in order to simultaneously transmit these two parts towards two selected auxiliary mirrors.

7. The device according to any one of claims 2 to 6, **characterised in that** said positioning means (MP) include support means (MS) joined to said secondary mirror (M2) or said return mirror (M3) and displacement means (ME) for displacing said support means (MS).

8. The device according to claim 7, **characterised in that** said displacement means (ME) are arranged in the form of an electric motor capable of driving said support means (MS) by rotation around an axis of rotation oriented in a selected manner.

9. The device according to claim 7, **characterised in that** said displacement means (ME) are arranged in the form of a piezoeletric element.

10. The device according to any one of claims 1 to 9, **characterised in that** at least some of said mirrors, including the primary mirror (M1), the secondary mirror (M2) and the auxiliary mirrors (MAj) together constitute a telescope.

11. The device according to any one of claims 1 to 10, **characterised in that** at least some of said auxiliary mirrors (MA1-MA8) are installed in fixed positions relative to said primary mirror (M1).

12. The device according to any one of claims 1 to 10, **characterised in that** it comprises auxiliary selective positioning means arranged to place at least some of said auxiliary mirrors (MA1-MA8) in different positions, which positions are selected so that each may reflect said secondary light beam in different selected directions.

13. The device according to any one of claims 1 to 12, **characterised in that** all of its constituent elements can be joined to said spacecraft to be actuated.

14. The device according to any one of claims 1 to 12, **characterised in that** its constituent elements can be distributed over at least two spacecraft remote from each other.

15. A spacecraft (S), **characterised in that** it comprises an actuating device (D) according to any one of the previous claims.

16. The spacecraft according to claim 15, **characterised in that** it is selected from a group comprising at least satellites, space probes, parts of satellites and parts of space probes.

17. A set of spacecraft (S) designed to fly in formation, **characterised in that** at least one of said spacecraft is a spacecraft (S) according to any one of claims 15 and 16, designed to use its actuating device (D) to coordinate its trajectory with at least one other of said spacecraft (S).

## Patentansprüche

1. Vorrichtung (D) zum Betätigen eines Raumflugkörpers (S), die Folgendes umfasst: einen primären festen Spiegel (M1), der Licht von einem Stern in Richtung eines sekundären Spiegels (M2) in Form eines primären Lichtstrahls reflektieren kann, wobei der sekundäre Spiegel (M2) ebenfalls wenigstens einen Teil des primären Lichtstrahls in Form eines sekundären Strahls in eine gewählte Richtung reflektieren kann, **dadurch gekennzeichnet, dass** er Folgendes umfasst: i) wenigstens zwei Zusatzspiegel (MA1-MA8), die an gewählten Stellen platziert sind und wenigstens einen Teil des von dem sekundären Spiegel (M2) kommenden sekundären Lichtstrahls in gewählten unterschiedlichen Richtungen auf eine solche Weise reflektieren können, dass die verschiedenen Bewegungen des Raumflugkörpers (S) induziert werden, und ii) Mittel zum selektiven Positionieren (MP), um die selektive Reflexion des sekundären Lichtstrahls in der Richtung von wenigstens einem der Zusatzspiegel (MA1-MA8) zu bewirken, so dass die Reflexion auf den/die Zusatzspiegel eine gewählte Bewegung des Raumflugkörpers (S) bewirkt.

2. Vorrichtung nach Anspruch 1, **dadurch gekennzeichnet, dass** der sekundäre Spiegel (M2) mit den Positionierungsmitteln (MP) unlösbar verbunden ist, so dass er durch diese in den verschiedenen Positionen positioniert werden kann, die so gewählt sind, dass jede den sekundären Lichtstrahl zu wenigstens einem gewählten Zusatzspiegel (MA1-MA8) reflektieren kann.

3. Vorrichtung nach Anspruch 2, **dadurch gekennzeichnet, dass** der sekundäre Spiegel (M2) die Aufgabe hat, den sekundären Lichtstrahl in wenigstens zwei Teile zu spalten, so dass diese beiden Teile gleichzeitig in Richtung der beiden gewählten Zusatzspiegel übertragen werden können.

4. Vorrichtung nach Anspruch 1, **dadurch gekennzeichnet, dass** der sekundäre Spiegel (M2) in Bezug auf den primären Spiegel (M1) fest ist, und dadurch, dass er einen Laserspiegel (M3) umfasst, der im Pfad des sekundären Lichtstrahls platziert und mit den Positionierungsmitteln (MP) unlösbar verbunden ist, so dass er durch diese in den verschiedenen Positionen platziert werden kann, die so gewählt sind, dass jede den sekundären Lichtstrahl in Richtung auf wenigstens einen gewählten Zusatzspiegel reflektieren kann.

5. Vorrichtung nach Anspruch 1, **dadurch gekennzeichnet, dass** sie einen Laserspiegel (M3) umfasst, der in Bezug auf den primären Spiegel (M1) fest und im Pfad des sekundären Lichtstrahls platziert ist, und dadurch, dass der sekundäre Spiegel (M2) mit den Positionierungsmitteln (MP) unlösbar verbunden ist, so dass er durch diese in den verschiedenen Positionen platziert werden kann, die so gewählt sind, dass jede den sekundären Lichtstrahl in Richtung auf die verschiedenen Reflexionszonen des Laserspiegels (M3) für die Reflexion in Richtung auf die verschiedenen Zusatzspiegel (MA1-MA8) reflektieren kann.

6. Vorrichtung nach einem der Ansprüche 4 und 5, **dadurch gekennzeichnet, dass** der Laserspiegel (M3) die Aufgabe hat, den sekundären Lichtstrahl in wenigstens zwei Teile zu spalten, so dass diese beiden Teile gleichzeitig in Richtung von zwei gewählten Zusatzspiegeln übertragen werden können.

7. Vorrichtung nach einem der Ansprüche 2 bis 6, **dadurch gekennzeichnet, dass** die Positionierungsmittel (MP) Lagerungsmittel (MS) umfassen, die mit dem sekundären Spiegel (M2) oder dem Laserspiegel (M3) und den Verschiebungsmitteln (ME) zum Verschieben des Lagerungsmittels (MS) unlösbar verbunden sind.

8. Vorrichtung nach Anspruch 7, **dadurch gekennzeichnet, dass** die Verschiebungsmittel (ME) in Form eines Elektromotors ausgebildet sind, um das Lagerungsmittel (MS) in Rotation um eine auf eine gewählte Weise ausgerichtete Rotationsachse zu versetzen.

9. Vorrichtung nach Anspruch 7, **dadurch gekennzeichnet, dass** die Verschiebungsmittel (ME) in Form eines piezoelektrischen Elementes ausgebildet sind.

10. Vorrichtung nach einem der Ansprüche 1 bis 9, **dadurch gekennzeichnet, dass** wenigstens einige der Spiegel aus primärem Spiegel (M1), sekundärem Spiegel (M2) und Zusatzspiegeln (MAj) gemeinsam ein Teleskop bilden.

11. Vorrichtung nach einem der Ansprüche 1 bis 10, **dadurch gekennzeichnet, dass** wenigstens einige der genannten Zusatzspiegel (MA1-MA8) in festen Positionen in Bezug auf den primären Spiegel (M1) installiert sind.

12. Vorrichtung nach einem der Ansprüche 1 bis 10, **dadurch gekennzeichnet, dass** sie zusätzliche Mittel zum selektiven Positionieren umfasst, um wenigstens einige der Zusatzspiegel (MA1-MA8) in unterschiedlichen Positionen zu platzieren, die so gewählt sind, dass sie den sekundären Lichtstrahl in gewählten unterschiedlichen Richtungen reflektieren können.

13. Vorrichtung nach einem der Ansprüche 1 bis 12, **dadurch gekennzeichnet, dass** alle ihre Bestandelemente mit dem zu betätigenden Raumflugkörper verbunden werden können.

14. Vorrichtung nach einem der Ansprüche 1 bis 12, **dadurch gekennzeichnet, dass** ihre Bestandelemente auf wenigstens zwei voneinander entfernte Raumflugkörper verteilt werden können.

15. Raumflugkörper (S), **dadurch gekennzeichnet, dass** er eine Betätigungsvorrichtung (D) nach einem der vorherigen Ansprüche umfasst.

16. Raumflugkörper nach Anspruch 15, **dadurch gekennzeichnet, dass** er aus einer Gruppe ausgewählt ist, die wenigstens Satelliten, Raumsonden, Satellitenteile und Raumsondenteile umfasst.

17. Eine Gruppe von Raumflugkörpern (S) zum Fliegen in Formation, **dadurch gekennzeichnet, dass** wenigstens einer der Raumflugkörper ein Raumflugkörper (S) nach einem der Ansprüche 15 und 16 zum Verwenden seiner Betätigungsvorrichtung (D) ist, um seine Bahn mit wenigstens einem anderen der Raumflugkörper (S) zu koordinieren.
